# EUROPÄISCHE PATENTANMELDUNG

(11) **EP 2 712 843 A1**
(43) Veröffentlichungstag der Anmeldung: **02.04.2014**
(21) Anmeldenummer: 12186484.7
(22) Anmeldetag: 28.09.2012
(51) Int. Cl.: C01B 25/10, C01B 25/455, C01D 15/00, C01D 15/08

(54) **Herstellung von hochreinem Lithiumdifluorphosphat**

(71) Anmelder: LANXESS Deutschland GmbH, 50569 Köln (DE)
(72) Erfinder: Boll, Matthias, 51061 Köln (DE); Ebenbeck, Wolfgang, 51373 Leverkusen (DE)

(57) **Zusammenfassung**

Die vorliegende Erfindung betrifft ein Verfahren zur Herstellung von hochreinem, insbesondere natriumarmem Lithiumdifluorphosphat, insbesondere in Form seiner Lösungen in organischen Lösungsmitteln, ausgehend von Lithiumfluorid und Phosphorpentafluorid.

## Beschreibung

Die vorliegende Erfindung betrifft ein Verfahren zur Herstellung von hochreinem, insbesondere natriumarmem Lithiumdifluorphosphat, insbesondere in Form seiner Lösungen in organischen Lösungsmitteln, ausgehend von Lithiumfluorid und Phosphorpentafluorid.

Die Verbreitung von tragbaren elektronischen Geräten, wie z.B. Laptop und Palmtop-Computern, Mobiltelefonen oder Videokameras und damit auch der Bedarf nach leichten und leistungsfähigen Batterien und Akkumulatoren hat in den letzten Jahren weltweit dramatisch zugenommen. Hinzu kommt in Zukunft die Ausrüstung von Elektrofahrzeugen mit derartigen Akkumulatoren und Batterien.

Lithiumdifluorphosphat (LiPO₂F₂) hat insbesondere als alternatives, weil recht beständiges Leitsalz zu Lithiumhexafluorophosphat in der Herstellung von leistungsfähigen Akkumulatoren industrielles Interesse geweckt. Um die Funktionsfähigkeit und Lebensdauer und damit die Qualität solcher Akkumulatoren sicherzustellen, ist es von besonderer Wichtigkeit, dass die eingesetzten Lithiumverbindungen hochrein sind und insbesondere möglichst geringe Anteile an anderen Metallionen, wie insbesondere Natrium- oder Kaliumionen enthalten. Fremdmetallionen werden aufgrund von Niederschlagsbildung für Zellenkurzschlüsse verantwortlich gemacht (US 7,981,388). Hohe Gehalte an Chlorid werden für Korrosion verantwortlich gemacht.

Aus dem Stand der Technik sind nur wenige Verfahren zur Herstellung von Lithiumdifluorphosphat bekannt.

Aus WO 2012/004188 A ist ein Verfahren bekannt, bei dem Tetraphosphordecaoxid (P₄O₁₀) mit Lithiumfluorid (LiF) bei Temperaturen von etwa 300°C zu Lithiumdifluorphosphat umgesetzt wird.

Aus WO 2008/111367 A ist ein Verfahren bekannt, bei dem Chloride und Bromide mit Lithiumhexafluorophosphat und Wasser umgesetzt werden.

EP 2 061 115 offenbart ein Verfahren, bei dem Lithiumhexafluorophosphat mit Wasser in Gegenwart von Siloxanen teilweise hydrolysiert wird, wobei Lithiumdifluorphosphat und Lithiumtetrafluorphosphat erhalten wird.

Allen Verfahren ist gemeinsam, dass sie entweder bezüglich ihrer Zielprodukte unspezifisch ablaufen oder hohe Mengen an zwangsläufig anfallenden Beiprodukten erzeugen.

Der Stand der Technik zeigt, dass es technisch sehr aufwändig ist, hohe Reinheiten für Lithiumdifluorphosphat zu erzielen und insbesondere den Gehalt an Fremdmetallionen sowie den Gehalt an Chlorid niedrig zu halten. Mit den bislang bekannten Verfahren zur Herstellung von Lithiumdifluorphosphat kann folglich nicht jede Reinheitsanforderung erfüllt werden.

Demgemäß lag eine Aufgabe der vorliegenden Erfindung darin, ein effizientes Verfahren zur Herstellung von hochreinem Lithiumdifluorphosphat oder hochreine Lösungen enthaltend Lithiumdifluorphosphat in organischen Lösungsmitteln bereitzustellen, das ohne aufwändige Reinigungsoperationen auskommt und hohe Ausbeuten liefert.

Die Lösung der Aufgabe und Gegenstand der vorliegenden Erfindung ist nun ein Verfahren zur Herstellung von Lithiumdifluorphosphat umfassend zumindest den Schritt:
a) Inkontaktbringen von festem Lithiumfluorid mit einem Gas enthaltend Phosphorpentafluorid wobei das feste Lithiumfluorid einen Wassergehalt von mehr als 1.500 ppm, vorzugsweise 1.550 ppm oder mehr, besonders bevorzugt 1550 ppm bis 100.000 ppm, noch weiter bevorzugt 2.000 ppm bis 20.000 ppm und ganz besonders bevorzugt 5.000 ppm bis 15.000 ppm aufweist.
   Sofern Lösungen von Lithiumdifluorphosphat in organischem Lösungsmittel hergestellt werden sollen, schließen sich vorzugsweise zumindest folgende Schritte an
b) Inkontaktbringen des gemäß a) gebildeten Reaktionsgemisches enthaltend Lithiumdifluorphosphat mit einem organischen Lösungsmittel, wobei das gebildete Lithiumdifluorphosphat zumindest teilweise in Lösung geht
c) gegebenenfalls aber vorzugsweise Abtrennung von festen Bestandteilen von der Lösung enthaltend Lithiumhexafluorophosphat.

Es sei an dieser Stelle angemerkt, dass der Rahmen der Erfindung alle beliebigen und möglichen Kombinationen der oben stehenden und im Folgenden aufgeführten, allgemeinen oder in Vorzugsbereichen genannten Komponenten, Wertebereiche bzw. Verfahrensparameter umfasst.

In Schritt a) wird festes Lithiumfluorid enthaltend den oben spezifizierten Wassergehalt mit einem Gas enthaltend Phosphorpentafluorid in Kontakt gebracht, wobei ein Reaktionsgemisch enthaltend Lithiumdifluorphosphat und nicht umgesetztes Lithiumfluorid erhalten wird.

Das in Schritt a) eingesetzte Lithiumfluorid besitzt beispielsweise einen Reinheitsgrad von 98,0000 bis 99,9999 Gew.-%, vorzugsweise 99,0000 bis 99,9999 Gew.-%, weiter bevorzugt 99,9000 bis 99,9995 Gew.-%, besonders bevorzugt 99,9500 bis 99,9995 Gew.-% und ganz besonders bevorzugt 99,9700 bis 99,9995 Gew.-% bezogen auf wasserfreies Produkt.

Das eingesetzte Lithiumfluorid besitzt weiterhin vorzugsweise an Fremdionen:
1) einen Gehalt von 0,1 bis 250 ppm, bevorzugt 0,1 bis 75 ppm, weiter bevorzugt 0,1 bis 50 und besonders bevorzugt 0,5 bis 10 ppm und ganz besonders bevorzugt 0,5 bis 5 ppm Natrium in ionischer Form und
2) einen Gehalt von 0,01 bis 200 ppm, bevorzugt 0,01 bis 10 ppm, weiter bevorzugt 0,5 bis 5 ppm und besonders bevorzugt 0,1 bis 1 ppm Kalium in ionischer Form auf.
   Das eingesetzte Lithiumfluorid besitzt weiterhin vorzugsweise an Fremdionen
3) einen Gehalt von 0,05 bis 500 ppm, bevorzugt 0,05 bis 300 ppm, weiter bevorzugt 0,1 bis 250 ppm und besonders bevorzugt 0,5 bis 100 ppm Calcium in ionischer Form und/oder
4) einen Gehalt von 0,05 bis 300 ppm, vorzugsweise 0,1 bis 250 ppm und besonders bevorzugt 0,5 bis 50 ppm Magnesium in ionischer Form.

Das eingesetzte Lithiumfluorid besitzt weiterhin beispielsweise an Fremdionen
i) einen Gehalt von 0,1 bis 1000 ppm, bevorzugt von 0,1 bis 100 ppm und besonders bevorzugt 0,5 bis 10 ppm Sulfat und/oder
ii) einen Gehalt von 0,1 bis 1000 ppm, vorzugsweise 0,5 bis 500 ppm Chlorid, ebenfalls bezogen auf das wasserfreie Produkt und wobei gilt, daß die Summe von Lithiumfluorid und den vorgenannten Fremdionen 1,000,000 ppm bezogen auf das Gesamtgewicht des technischen Lithiumcarbonats bezogen auf das wasserfreie Produkt nicht überschreitet.

In einer Ausführungsform enthält das Lithiumfluorid einen Gehalt an Fremdmetallionen von insgesamt 1000 ppm oder weniger, vorzugsweise 300 ppm oder weniger, besonders bevorzugt 20 ppm oder weniger und ganz besonders bevorzugt 10 ppm oder weniger.

Das Inkontaktbringen von festem Lithiumfluorid enthaltend den oben spezifizierten Wassergehalt mit einem Gas enthaltend Phosphorpentafluorid, wobei ein Reaktionsgemisch enthaltend Lithiumdifluorphosphat und nicht umgesetztes Lithiumfluorid erhalten wird, kann mit jeder Methode erfolgen, die dem Fachmann für die Umsetzung von gasförmigen mit festen Stoffen bekannt ist. Beispielsweise kann das Inkontaktbringen in einem Festbett oder einem Wirbelbett erfolgen, wobei das Inkontaktbringen in einem Wirbelbett bevorzugt ist. In einer Ausführungsform kann das Wirbelbett als gerührtes Wirbelbett ausgestaltet sein.

Das eingesetzte feste Lithiumfluorid kann, insbesondere bei Einsatz als Festbett, beispielsweise in Form von Formkörpern oder in Form feiner Partikel z.B. also in Form eines Pulvers eingesetzt werden, wobei der Einsatz feiner Partikel bzw. Pulvern insbesondere für den Einsatz Wirbelbett bevorzugt ist.

Bei Einsatz von Formkörpern sind solche bevorzugt, die einen Feststoffgehalt im Bereich von 20 bis 95 Gew.-%, bevorzugt im Bereich von 60 bis 90 Gew.-%, besonders bevorzugt bei 67 bis 73 Gew.-% und ganz besonders bevorzugt ca. 70 Gew.-% liegt.

Formkörper können grundsätzlich in beliebiger Form vorliegen, wobei sphärische, zylinderförmige oder ringförmige Formkörper bevorzugt sind. Vorzugsweise sind die Formkörper in keiner Dimension größer als 3 cm, vorzugsweise nicht größer als 1,5 cm.

Formkörper werden beispielsweise durch Extrusion aus einer Mischung von Lithiumfluorid und Wasser hergestellt, wobei die Formkörper nach der Extrusion bei Temperaturen von 50 bis 200 °C, bevorzugt bei Temperaturen von 80 bis 150°C, besonders bevorzugt bei ca. 120°C getrocknet werden bis sie den oben spezifizierten Wassergehalt aufweisen. Solche Formkörper sind typischerweise zylinderförmig.

Wassergehalte werden, sofern nicht anders angegeben nach dem Verfahren nach Karl-Fischer bestimmt, welches dem Fachmann bekannt ist und zum Beispiel in P.Bruttel, R.Schlink, "Wasserbestimmung durch Karl-Fischer-Titration", Metrohm Monographie 8.026.5001, 2003-06. beschrieben wird.

Die Reaktionskinetik in Schritt a) hängt, ohne dass sich die Anmelderin wissenschaftlich exakt darauf festlegen will, von der Reaktionstemperatur, von der effektiven Oberfläche des Lithiumfluorids, dem Wassergehalt, den durch das Festbett oder Wirbelbett verursachten Strömungswiderstand und der Strömungsgeschwindigkeit, dem Druck, sowie der Volumenzunahme des Reaktionsgemisches während der Reaktion ab. Während Temperatur, Druck und Strömungsgeschwindigkeit verfahrenstechnisch geregelt werden können, hängt die effektive Oberfläche des Lithiumfluorids, der Strömungswiderstand sowie die Volumenzunahme des Reaktionsgemisches von der Morphologie des eingesetzten Lithiumfluorids ab.

Es wurde gefunden, dass es sowohl für den Einsatz zur Herstellung von Formkörpern als auch für den Einsatz in Form feiner Partikel vorteilhaft ist, Lithiumfluorid mit einem D50-Wert von 4 bis 1000 µm, bevorzugt 15 bis 1000 µm, weiter bevorzugt 15 bis 300 ppm, besonders bevorzugt 15 bis 200 µm und noch weiter bevorzugt 20 bis 200 µm einzusetzen.

Das eingesetzte Lithiumfluorid besitzt weiterhin vorzugsweise einen D10-Wert von 0,5 µm oder mehr, bevorzugt 5 µm oder mehr, weiter bevorzugt 7 µm oder mehr. In einer anderen Ausführungsform besitzt das Lithiumfluorid einen D10-Wert von 15 µm oder mehr.

Unter dem D50-Wert bzw. dem D10-Wert ist die Partikelgröße gemeint, in der und unter der insgesamt 10 Vol.-% bzw. 50 Vol.% des Lithiumfluorids vorliegen.

Das Lithiumfluorid besitzt weiterhin vorzugsweise eine Schüttdichte von 0,6 g/cm³ oder mehr, bevorzugt 0,8 g/cm³ oder mehr, weiter bevorzugt 0,9 g/cm³ oder mehr und besonders bevorzugt von 0,9 g/cm³ bis 1,2 g/cm³.

Das Lithiumfluorid mit vorgenannten Spezifikationen kann beispielsweise nach einem Verfahren gewonnen werden, das zumindest folgende Schritte umfasst:
i) Bereitstellung eines wässrigen Mediums enthaltend gelöstes Lithiumcarbonat
ii) Umsetzung des gemäß a) bereitgestellten wässrigen Mediums mit gasförmigem Fluorwasserstoff zu einer wässrigen Suspension von festem Lithiumfluorid
iii) Abtrennung des festen Lithiumfluorid aus der wässrigen Suspension
iv) Trocknung des abgetrennten Lithiumfluorids auf den oben spezifizierten Wassergehalt.

Gemäß Schritt i) wird eine wässrige Lösung enthaltend Lithiumcarbonat bereitgestellt.

Unter dem Begriff "wässriges Medium enthaltend gelöstes Lithiumcarbonat" ist hier ein flüssiges Medium zu verstehen, das
i) gelöstes Lithiumcarbonat enthält, vorzugsweise in einer Menge von mindestens 2,0 g/l, besonders bevorzugt 5,0 g/l bis zur maximalen Löslichkeit im wässrigen Medium bei der gewählten Temperatur, ganz besonders bevorzugt 7,0 g/l bis zur maximalen Löslichkeit im wässrigen Medium bei der gewählten Temperatur. Insbesondere beträgt der Gehalt an Lithiumcarbonat 7,2 bis 15,4 g/l. Dem Fachmann ist bekannt, dass die Löslichkeit von Lithiumcarbonat in reinem Wasser bei 0°C 15,4 g/l bei 20°C 13,3 g/l, bei 60°C 10,1 und bei 100°C 7,2 g/l beträgt und folglich gewisse Konzentrationen nur bei bestimmten Temperaturen erreicht werden können
ii) einen Gewichtsanteil von mindestens 50 % an Wasser, vorzugsweise 80 Gew.-%, besonders bevorzugt mindestens 90 Gew.-% bezogen auf das Gesamtgewicht des flüssigen Mediums enthält, und
iii) vorzugsweise auch feststofffrei ist oder einen Feststoffgehalt von mehr als 0,0 bis zu 0,5 Gew.-%, vorzugsweise feststofffrei ist oder einen Feststoffgehalt von mehr als 0,0 bis zu 0,1 Gew.-%, besonders bevorzugt feststofffrei ist oder einen Feststoffgehalt von mehr als 0,0 bis zu 0,005 Gew. und besonders bevorzugt feststofffrei ist,
   wobei die Summe der Komponenten i), ii) und vorzugsweise iii) maximal 100 Gew.-%, vorzugsweise 98 bis 100 Gew.-% und besonders bevorzugt 99 bis 100 Gew.-% bezogen auf das Gesamtgewicht des wässrigen Mediums enthaltend gelöstes Lithiumcarbonat beträgt.

Das wässrige Medium enthaltend gelöstes Lithiumcarbonat kann in einer weiteren Ausführungsform der Erfindung als weitere Komponente
iv) zumindest ein mit Wasser mischbares organisches Lösungsmittel enthalten. Geeignete, mit Wasser mischbare organische Lösungsmittel sind beispielsweise ein- oder mehrwertige Alkohole wie Methanol, Ethanol, n-Propanol, Isopropanol, n-Butanol, Ethylengylcol, Ethylenglycolmonomethylether, Ethylenglycolmonoethylether, Propylenglycol, 1,3-Propandiol oder Glycerin, Ketone wie Aceton oder Ethylmethylketon.

Sofern das wässrige Medium enthaltend gelöstes Lithiumcarbonat zumindest ein mit Wasser mischbares organisches Lösungsmittel enthält, kann deren Anteil beispielsweise mehr als 0,0 Gew.-% bis 20 Gew.-% betragen, vorzugsweise 2 bis 10 Gew.-%, wobei dann jeweils gilt, dass die Summe der Komponenten i), ii), iii) und iv) maximal 100 Gew.-%, vorzugsweise 95 bis 100 Gew.-% und besonders bevorzugt 98 bis 100 Gew.-% bezogen auf das Gesamtgewicht des wässrigen Mediums enthaltend gelöstes Lithiumcarbonat beträgt.

Vorzugsweise ist das wässrige Medium enthaltend gelöstes Lithiumcarbonat jedoch frei von mit Wasser mischbaren organischen Lösungsmitteln.

Das wässrige Medium enthaltend gelöstes Lithiumcarbonat kann als weitere Komponente
v) einen Komplexbildner enthalten, vorzugsweise in einer Menge von 0,001 bis 1 Gew.-%, vorzugsweise 0,005 bis 0,2 Gew-% bezogen auf das Gesamtgewicht des wässrigen Mediums enthaltend gelöstes Lithiumcarbonat.

Komplexbildner sind vorzugsweise solche, deren Komplexe mit Calcium-Ionen und MagnesiumIonen Komplexe bilden, die bei einem pH-Wert von 8 und 20°C eine Löslichkeit von mehr als 0,02 mol/l besitzen. Beispiele für geeignete Komplexbildner sind Ethylendiamintetraessigsäure (EDTA) und seine Alkalimetall- oder Ammoniumsalze, wobei Ethylendiamintetraessigsäure bevorzugt ist.

In einer Ausführungsform ist das wässrige Medium enthaltend gelöstes Lithiumcarbonat jedoch frei von Komplexbildnern.

Zur Bereitstellung der wässrigen Lösung enthaltend Lithiumcarbonat wird vorzugsweise so vorgegangen, dass festes Lithiumcarbonat mit einem lithiumcarbonatfreien oder lithiumcarbonatarmen wässrigen Medium in Kontakt gebracht wird, so dass das feste Lithiumcarbonat zumindest teilweise in Lösung geht. Unter einem Lithiumcarbonatarmen, wässrigen Medium wird ein wässriges Medium verstanden, das einen Gehalt an Lithiumcarbonat von bis zu 1,0 g/l, vorzugsweise bis zu 0,5 g/l Lithiumcarbonat aufweist aber nicht frei von Lithiumcarbonat ist.

Das zur Bereitstellung eingesetzte wässrige Medium erfüllt die Bedingungen die oben unter ii) und iii) genannt sind und weist optional die Komponenten iv) und v) auf.

Im einfachsten Fall ist das wässrige Medium Wasser, vorzugsweise Wasser mit einem spezifischen elektrischen Widerstand von 5 MΩ·cm bei 25°C oder mehr.

In einer bevorzugten Ausführungsform werden die Schritte i) bis iv) ein- oder mehrfach wiederholt.. In diesem Fall wird bei der Wiederholung zur Bereitstellung des wässrigen Mediums enthaltend gelöstes Lithiumcarbonat als lithiumcarbonatfreies oder lithiumcarbonatarmes wässriges Medium das wässrige Medium eingesetzt, dass in einem vorangegangenen Schritt iii) bei der Abtrennung von festem Lithiumfluorid aus der wässrigen Suspension von Lithiumfluorid anfällt. In diesem Fall enthält das lithiumcarbonatfreie oder lithiumcarbonatarme wässrige Medium gelöstes Lithiumfluorid, typischerweise bis zur Sättigungsgrenze bei der jeweiligen Temperatur.

In einer Ausführungsform kann das Inkontaktbringen des lithiumcarbonatfreien oder -armen, wässrigen Mediums mit dem festen Lithiumcarbonat in einem Rührreaktor, einem Durchflussreaktor oder jeder anderen Apparatur erfolgen, die dem Fachmann für die Kontaktierung von flüssigen mit festen Stoffen bekannt ist. Vorzugsweise wird im Sinne einer kurzen Verweildauer und der Erzielung einer möglichst nah am Sättigungspunkt liegenden Konzentration an Lithiumcarbonat im eingesetzten wässrigen Medium ein Überschuss an Lithiumcarbonat eingesetzt, d.h. so viel, dass eine vollständige Auflösung des festen Lithiumcarbonats nicht erfolgen kann. Um in diesem Fall den Feststoffanteil gemäß ii) zu begrenzen erfolgt anschließend eine Filtration, Sedimentation, Zentrifugation oder ein anderes, beliebiges Verfahren, das dem Fachmann zur Abtrennung von Feststoffen aus oder von Flüssigkeit bekannt ist, wobei die Filtration bevorzugt ist.

Sofern die Verfahrensschritte i) bis iii) wiederholt und/oder kontinuierlich durchgeführt werden, ist eine Filtration durch einen Querstromfilter bevorzugt.

Die Temperatur beim Inkontaktbringen kann beispielsweise vom Gefrierpunkt bis zum Siedepunkt des eingesetzten wässrigen Mediums erfolgen, vorzugsweise 0 bis 100°C, besonders bevorzugt 10° bis 60°C und besonders bevorzugt 10° bis 35°C, insbesondere 16 bis 24°C.

Der Druck beim Inkontaktbringen kann beispielsweise 100 hPa bis 2 MPa betragen, 900 hPa bis 1200 hPa, insbesondere Umgebungsdruck ist besonders bevorzugt.

Unter technischem Lithiumcarbonat wird im Rahmen der Erfindung Lithiumcarbonat verstanden, das einen Reinheitsgrad von 95,0 bis 99,9 Gew.-% vorzugsweise 98,0 bis 99,8 Gew.-% und besonders bevorzugt 98,5 bis 99,8 Gew.-% bezogen auf wasserfreies Produkt besitzt.

Vorzugsweise enthält das technische Lithiumcarbonat weiterhin an Fremdionen, d.h. an Ionen, die nicht Lithium- oder Carbonat-Ionen sind
1) einen Gehalt von 200 bis 5000 ppm, vorzugsweise 300 bis 2000 und besonders bevorzugt 500 bis 1200 ppm Natrium in ionischer Form und/oder
2) einen Gehalt von 5 bis 1000 ppm, vorzugsweise 10 bis 600 ppm Kalium in ionischer Form und/oder
3) einen Gehalt von 50 bis 1000 ppm, vorzugsweise 100 bis 500 und besonders bevorzugt 100 bis 400 ppm Calcium in ionischer Form und/oder
4) einen Gehalt von 20 bis 500 ppm, vorzugsweise 20 bis 200 und besonders bevorzugt 50 bis 100 ppm Magnesium in ionischer Form.

Weiterhin enthält das technische Lithiumcarbonat weiterhin an Fremdionen, d.h. an Ionen, die nicht Lithium- oder Carbonat-Ionen sind:
i) einen Gehalt von 50 bis 1000 ppm, vorzugsweise 100 bis 800 ppm Sulfat und/oder
ii) einen Gehalt von 10 bis 1000 ppm, vorzugsweise 100 bis 500 ppm Chlorid, ebenfalls bezogen auf das wasserfreie Produkt.

Generell gilt, dass die Summe von Lithiumcarbonat und den vorgenannten Fremdionen 1) bis 4) sowie gegebenenfalls i) und ii) 1,000,000 ppm bezogen auf das Gesamtgewicht des technischen Lithiumcarbonats bezogen auf das wasserfreie Produkt nicht überschreitet.

In einer weiteren Ausführungsform weist das technische Lithiumcarbonat eine Reinheit von 98,5 bis 99,5 Gew.-% und einen Gehalt von 500 bis 2000 ppm an Fremdmetallionen d.h. Natrium, Kalium, Magnesium und Calcium auf.

In einer weiteren Ausführungsform weist das technische Lithiumcarbonat vorzugsweise zusätzlich einen Gehalt von 100 bis 800 ppm an Fremdanionen, d.h. Sulfat oder Chlorid bezogen auf das wasserfreie Produkt auf.

Die hierin gemachten ppm-Angaben beziehen sich, sofern nicht explizit anders angegeben, generell auf Gewichtsanteile, die Gehalte der genannten Kationen und Anionen werden durch Ionenchromatographie ermittelt, sofern nicht anders angegeben gemäß Angaben im experimentellen Teil.

In einer Ausführungsform des erfindungsgemäßen Verfahrens erfolgt die Bereitstellung des wässrigen Mediums enthaltend Lithiumcarbonat bzw. das Inkontaktbringen eines lithiumcarbonatfreien oder -armen, wässrigen Mediums mit festem Lithiumcarbonat batchweise oder kontinuierlich, wobei die kontinuierliche Durchführung bevorzugt ist.

Das gemäß Schritt i) bereitgestellte wässrige Medium enthaltend gelöstes Lithiumcarbonat weist typischerweise einen pH-Wert von 8,5 bis 12,0, vorzugsweise von 9,0 bis 11,5 gemessen oder berechnet auf 20°C und 1013 hPa auf.

Bevor das gemäß Schritt i) bereitgestellte wässrige Medium enthaltend gelöstes Lithiumcarbonat in Schritt iib) eingesetzt wird, kann es über einen Ionentauscher geleitet werden, um insbesondere Calcium- und Magnesiumionen zumindest teilweise zu entfernen. Dafür können beispielsweise schwach- als auch stark saure Kationenaustauscher eingesetzt werden. Für den Einsatz im erfindungsgemäßen Verfahren können die Ionenaustauscher in Vorrichtungen, wie beispielsweise Durchflusssäulen, die mit den oben beschriebenen Kationenaustauschern beispielsweise in Form von Pulvern, Perlen oder Granulaten befüllt sind, eingesetzt werden.

Besonders geeignet sind Ionentauscher enthaltend Copolymerisate von zumindest Styrol und Divinylbenzol, die weiterhin beispielsweise Aminoalkylenphosphonsäure-Gruppen oder Iminodiessigsäure-Gruppen enthalten.

Solche Ionentauscher sind beispielsweise solche des Typs Lewatit TM wie beispielsweise Lewatit TM OC 1060 (AMP-Typ), Lewatit TM TP 208 (IDA-Typ), Lewatit TM E 304/88, Lewatit TM S 108, Lewatit TP 207, Lewatit TM S 100; solche des Typs Amberlite TM, wie beispielsweise Amberlite TM IR 120, Amberlite TM IRA 743; solche des Typs Dowex TM, wie beispielsweise Dowex TM HCR; solche des Typs Duolite, wie beispielsweise Duolite TM C 20, Duolite TM C 467, Duolite TM FS 346; und solche des Typs Imac TM, wie beispielsweise Imac TM TMR, wobei Lewatit TM Typen bevorzugt sind.

Bevorzugt werden solche Ionentauscher eingesetzt, die möglichst natriumarm sind. Dazu ist es vorteilhaft, den Ionentauscher vor seinem Einsatz mit der Lösung eines Lithiumsalzes, vorzugsweise einer wässrigen Lösung von Lithiumcarbonat zu spülen.

In einer Ausführungsform des erfindungsgemäßen Verfahrens findet keine Behandlung mit Ionentauschern statt.

Gemäß Schritt ii) erfolgt die Umsetzung des gemäß Schritt i) bereitgestellten wässrigen Mediums enthaltend gelöstes Lithiumcarbonat mit gasförmigem Fluorwasserstoff zu einer wässrigen Suspension von festem Lithiumfluorid.

Die Umsetzung kann beispielsweise durch Einleiten oder Überleiten eines gasförmigen Fluorwasserstoff enthaltenen Gasstromes in oder über das wässrige Mediums enthaltend gelöstes Lithiumcarbonat erfolgen oder durch Versprühen, Vernebeln oder Durchfließen des wässrigen Mediums enthaltend gelöstes Lithiumcarbonat in oder durch ein Gas enthaltend gasförmigen Fluorwasserstoff.

Aufgrund der sehr starken Löslichkeit von gasförmigem Fluorwasserstoff in wässrigen Medien ist Überleiten, Versprühen, Vernebeln oder Durchfließen bevorzugt wobei Überleiten noch weiter bevorzugt ist.

Als gasförmigen Fluorwasserstoff enthaltenen Gasstrom oder Gas enthaltend gasförmigen Fluorwasserstoff kann entweder gasförmiger Fluorwasserstoff als solcher eingesetzt werden oder ein Gas enthaltend gasförmigen Fluorwasserstoff und ein Inertgas, wobei unter einem Inertgas ein Gas zu verstehen ist, dass unter den üblichen Reaktionsbedingungen nicht mit Lithiumfluorid reagiert. Beispiele sind Luft, Stickstoff, Argon und andere Edelgase oder Kohlendioxid, wobei Luft und noch mehr Stickstoff bevorzugt sind.

Der Anteil an Inertgas kann beliebig variieren und beispielsweise 0,01 bis 99 Vol.-% betragen, vorzugsweise 1 bis 20 Vol.-%.

In einer bevorzugten Ausführungsform enthält der eingesetzte gasförmige Fluorwasserstoff 50 ppm Arsen in Form von Arsenverbindungen oder weniger, vorzugsweise 10 ppm oder weniger. Die angegebenen Arsengehalte werden photometrisch nach Umsetzung zu Arsenwasserstoff und dessen Umsetzung mit Silberdiethyldithiocarbaminat zu einem roten Farbkomplex (Spektralpotometer, z.B. LKB Biochrom, Ultrospec) bei 530 nm ermittelt.

In einer ebenfalls bevorzugten Ausführungsform enthält der eingesetzte gasförmige Fluorwasserstoff 100 ppm Hexafluorkieselsäure oder weniger, vorzugsweise 50 ppm oder weniger. Der angegebene Hexafluorkieselsäuregehalt wird photometrisch als Silicomolybdänsäure und deren Reduktion mit Ascorbinsäure zu einem blauen Farbkomplex (Spektralpotometer, z.B. LKB Biochrom, Ultrospec) ermittelt. Störende Einflüsse von Fluoriden werden durch Borsäure, störende Reaktionen von Phosphat und Arsen durch Zugabe von Weinsäure unterdrückt.

Bei der Umsetzung gemäß Schritt ii) entsteht Lithiumfluorid, das aufgrund der Tatsache, dass es im wässrigen Medium schwerer löslich ist als Lithiumcarbonat, ausfällt und folglich eine wässrige Suspension von festem Lithiumfluorid bildet. Dem Fachmann ist bekannt, dass Lithiumfluorid eine Löslichkeit von etwa 2,7 g/l bei 20°C besitzt.

Die Umsetzung erfolgt vorzugsweise derart, dass die resultierende wässrigen Suspension von festem Lithiumfluorid einen pH-Wert von 3,5 bis 8,0, vorzugsweise 4,0 bis 7,5 und besonders bevorzugt 5,0 bis 7,2 erreicht. Bei den genannten pH-Werten wird Kohlendioxid freigesetzt. Um dessen Freisetzung aus der Suspension zu ermöglichen ist es vorteilhaft die Suspension beispielsweise zu Rühren oder über statische Mischelemente zu leiten.

Die Temperatur bei der Umsetzung gemäß Schritt ii) kann beispielsweise vom Gefrierpunkt bis zum Siedepunkt des eingesetzten wässrigen Mediums enthaltend gelöstes Lithiumcarbonat betragen, vorzugsweise 0 bis 65°C, besonders bevorzugt 15° bis 45°C und besonders bevorzugt 15° bis 35°C, insbesondere 16 bis 24°C.

Der Druck bei der Umsetzung gemäß Schritt ii) kann beispielsweise 100 hPa bis 2 MPa betragen, 900 hPa bis 1200 hPa, insbesondere Umgebungsdruck ist besonders bevorzugt.

Gemäß Schritt iii) erfolgt die Abtrennung des festen Lithiumfluorids aus der wässrigen Suspension.

Die Abtrennung erfolgt beispielsweise durch Filtration, Sedimentation, Zentrifugation oder ein anderes, beliebiges Verfahren, das dem Fachmann zur Abtrennung von Feststoffen aus oder von Flüssigkeiten bekannt ist, wobei die Filtration bevorzugt ist.

Sofern das Filtrat für Schritt i) wieder eingesetzt wird und die Verfahrensschritte a) bis c) wiederholt durchgeführt werden , ist eine Filtration durch einen Querstromfilter bevorzugt.

Das so erhaltene feste Lithiumfluorid besitzt typischerweise noch eine Restfeuchte von 1 bis 40 Gew.-%, bevorzugt 5 bis 30 Gew.-%.

Bevor das gemäß Schritt iii) abgetrennte Lithiumfluorid gemäß Schritt iv) getrocknet wird kann es mit Wasser oder einem Medium enthaltend Wasser und mit Wasser mischbare organische Lösungsmittel ein- oder mehrfach gewaschen werden. Wasser ist bevorzugt. Wasser mit einem elektrischen Widerstand von 15 MΩ·cm bei 25°C oder mehr ist besonders bevorzugt. Aus Schritt iii) am festen Lithiumfluorid anhaftendes Wasser mit Fremdionen wird dadurch weitestgehend entfernt.

Gemäß Schritt iv) wird das Lithiumfluorid getrocknet. Die Trocknung kann in jedem dem Fachmann zur Trocknung bekannten Apparatur wie zum Beispiel Band-, Dünnschicht- oder Konustrockner durchgeführt werden. Vorzugsweise erfolgt die Trocknung durch Erhitzen des Lithiumfluorids, vorzugsweise auf 100 bis 800°C besonders bevorzugt 200 bis 500°C. Alternativ kann durch Mikrowellen getrocknet werden. Die Trocknung kann entweder so erfolgen dass der gewünschte Wassergehalt direkt erreicht wird, oder so dass nach intensiverem Trocknen dem Lithiumfluorid wieder Wasser bis zur gewünschten Menge zugegeben wird. Um in diesem Fall eine möglichst homogene Verteilung des Wassers am festen Lithiumfluorid zu erreichen wird, kann beispielsweise eine intensive Vermischung durch Mahlen oder Rühren erfolgen, oder das Wasser alternativ auch im Form eines feuchten Gasstromes eingebracht werden.

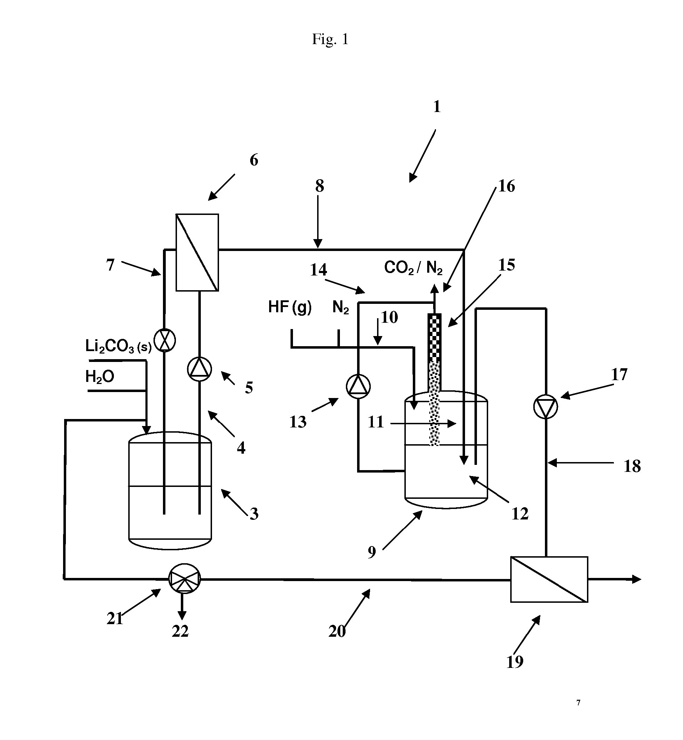

Die Herstellung von Lithiumfluorid anhand der Figur 1 näher erläutert.

In einer Vorrichtung zur Herstellung von Lithiumfluorid 1 wird festes Lithiumcarbonat (Li₂CO₃ (s)) mit Wasser (H₂O) und, sofern es sich nicht um die Erstbefüllung der Vorrichtung 1 handelt, dem Filtrat aus der Filtrationseinheit 19 in der Vorlage 3 suspendiert, wobei das Lithiumcarbonat zumindest teilweise in Lösung geht. Die so erhaltene Suspension wird über die Leitung 4 durch die Pumpe 5 über eine Filtrationseinheit 6, die hier als Querstromfilter ausgebildet ist, gefördert, wobei nicht gelöstes Lithiumcarbonat in die Vorlage 3 über die Leitung 7 zurückgeführt wird und das Filtrat, das wässrige Medium enthaltend gelöstes Lithiumcarbonat, über die Leitung 8 in den Reaktor 9 eingeleitet wird. In den Reaktor 9 wird über die Leitung 10 ein gasförmigen Fluorwasserstoff enthaltener Gasstrom, der hier gasförmigen Fluorwasserstoff und Stickstoff enthält, in den Gasraum 11 des Reaktors eingeleitet, der sich über dem Flüssigraum 12 des Reaktors befindet. Durch die Pumpe 13 wird der Inhalt des Flüssigkeitsraums 12, der zunächst im Wesentlichen aus dem wässrigen Medium enthaltend gelöstes Lithiumcarbonat besteht und durch die Reaktion in eine Suspension enthaltend festes Lithiumfluorid überführt wird, über die Leitung 14 auf eine Füllkörperkolonne 15 geführt, in der die Freisetzung des während der Reaktion gebildeten Kohlendioxids aus der Suspension gefördert wird. Über den Auslass 16 wird das Kohlendioxid und der als Verdünnungsmittel genutzte Stickstoff ausgeschleust. Nach Durchlaufen der Füllkörperkolonne fließt der aus dem Reaktor 9 geführte Inhalt des Flüssigraums 12 durch den Gasraum 11 wieder in den Flüssigraum 12 zurück. Die Rückführung durch den Gasraum 11 besitzt den Vorteil, dass die Flüssigkeitsoberfläche, teilweise auch durch passive Zerstäubung, erhöht wird, was die Reaktion mit gasförmigem Fluorwasserstoff fördert. Nach Erreichen des Ziel-pH-Wertes oder ausreichender Bildung von festem Lithiumfluorid wird die entstandene Suspension von festem Lithiumfluorid durch die Pumpe 17 über die Leitung 18 zur Filtrationseinheit 19 gefördert, die hier als Querstromfilter ausgebildet ist. Das feste Lithiumfluorid (LiF (s)) wird gewonnen, das Filtrat, das lithiumcarbonatfreie oder lithiumcarbonatarme wässrige Medium wird über die Leitung 20 in die Vorlage 3 zurückgeführt. Da das gewonnene Lithiumfluorid einen Restgehalt an Wasser besitzt und Wasser auch über den Auslass 16 mit dem Kohlendioxid ausgetragen wird, dient die Zuführung des Wassers (H₂O) in die Vorlage 3 im Wesentlichen nach der Erstbefüllung der Vorrichtung 1 zum Ausgleich des vorstehend beschriebenen Wasserverlustes in weiteren Zyklen.

Dem Fachmann ist klar, dass sich Fremdmetallionen wie insbesondere Natrium und Kalium, die gut wasserlösliche Carbonate und Fluoride bilden, im Kreislaufstrom der wässrigen Medien anreichern. Gegebenenfalls kann ein Teil des Filtrats der Filtrationseinheit 19 über den Auslass 22 am Ventil 21, das hier beispielhaft als Dreiwegeventil ausgestaltet ist, ausgeschleust werden.

Durch die Rückführung des Filtrats der Filtrationseinheit 19 in die Vorlage 3 ist es möglich, bei der Lithiumfluoridherstellung einen Umsetzungsgrad von 95 % oder mehr, insbesondere bei hohen Wiederholungszahlen der Schritte a) bis d), auch Zyklenzahlen genannt, von beispielsweise 30 oder mehr sogar von 97 % oder mehr zu erreichen, wobei unter Umsetzungsgrad die Ausbeute an hochreinem Lithiumfluorid bezogen auf das eingesetzte Lithiumcarbonat zu verstehen ist.

In Schritt a) wird festes Lithiumfluorid enthaltend den oben spezifizierten Wassergehalt mit einem Gasstrom enthaltend Phosphorpentafluorid in Kontakt gebracht. Das Phosphorpentafluorid kann dabei in an sich bekannter Weise durch ein Verfahren hergestellt werden, das zumindest die folgenden Schritte umfasst.
1) Umsetzung von Phosphortrichlorid mit Fluorwasserstoff zu Phosphortrifluorid und Chlorwasserstoff
2) Umsetzung von Phosphortrifluorid mit elementarem Chlor zu Phosphordichlorid trifluorid
3) Umsetzung von Phosphordichloridtrifluorid mit Fluorwasserstoff zu Phosphorpentafluorid und Chlorwasserstoff

Das gemäß Schritt 3) erhaltene Gasgemisch kann entweder mit oder auch ohne Entfernung des Chlorwasserstoffs in Schritt a) als Gas enthaltend Phosphorpentafluorid direkt eingesetzt werden.

Sollen besonders niedrige Chloridgehalte verwirklicht werden, wird Chlorwasserstoff aus dem Gasgemisch zumindest weitestgehend entfernt, was durch in an sich bekannte Methoden wie beispielsweise selektive Adsorption an basischen Adsorbentien erfolgen kann

Alternativ kann der Chloridgehalt durch Einleiten von Inertgas wie beispielsweise Stickstoff oder Argon durch den Reaktor im Anschluß an die Umsetzung von PF5 mit LiF erniedrigt werden.

Alternativ ist auch die Herstellung von weitestgehend chlorwasserstofffreiem Phosphorpentafluorid durch Umsetzung von Tetraphosphordecaoxid mit Fluorwasserstoff.

Als Gas enthaltend Phosphorpentafluorid wird typischerweise ein Gasgemisch enthaltend 5 bis 41 Gew.-% Phosphorpentafluorid und 6 bis 59 Gew.-% Chlorwasserstoff, vorzugsweise 20 bis 41 Gew.-% Phosphorpentafluorid und 40 bis 59 Gew.-% Chlorwasserstoff" besonders bevorzugt 33 bis 41 Gew.-% Phosphorpentafluorid und 49 bis 59 Gew.-% Chlorwasserstoff eingesetzt werden, wobei der Anteil von Phosphorpentafluorid und Chlorwasserstoff beispielsweise 11 bis 100 Gew.-%, vorzugsweise 90 bis 100 Gew.-% und besonders bevorzugt 95 bis 100 Gew.-% beträgt.

Die Differenz zu 100 Gew.-%, sofern überhaupt vorhanden, können Inertgase sein, wobei unter einem Inertgas hier ein Gas zu verstehen ist, das unter den üblichen Reaktionsbedingungen nicht mit Phosphorpentafluorid, Fluor- oder Chlorwasserstoff oder Lithiumfluorid reagiert. Beispiele sind Stickstoff, Argon und andere Edelgase oder Kohlendioxid, wobei Stickstoff bevorzugt ist.

Die Differenz zu 100 Gew.-%, sofern überhaupt vorhanden, kann alternativ oder ergänzend weiterhin Fluorwasserstoff sein.

Bezogen auf den Gesamtprozess über die Stufen 1) bis 3) wird Fluorwasserstoff beispielsweise in einer Menge von 4,5 bis 8, vorzugsweise 4,8 bis 7,5 und besonders bevorzugt 4,8 bis 6,0 mol Fluorwasserstoff pro mol Phosphortrichlorid eingesetzt.

Typischerweise ist das Gas enthaltend Phosphorpentafluorid daher ein Gasgemisch enthaltend 5 bis 41 Gew.-% Phosphorpentafluorid, 6 bis 59 Gew.-% Chlorwasserstoff und 0 bis 50 Gew.-% Fluorwasserstoff, vorzugsweise 20 bis 41 Gew.-% Phosphorpentafluorid, 40 bis 59 Gew.-% Chlorwasserstoff und 0 bis 40 Gew.-% Fluorwasserstoff, besonders bevorzugt 33 bis 41 Gew.-% Phosphorpentafluorid, 49 bis 59 Gew.-% Chlorwasserstoff und 0 bis 18 Gew.-% Fluorwasserstoff, wobei der Anteil von Phosphorpentafluorid, Chlorwasserstoff und Fluorwasserstoff beispielsweise 11 bis 100 Gew.-%, vorzugsweise 90 bis 100 Gew.-% und besonders bevorzugt 95 bis 100 Gew.-% beträgt.

Der Reaktionsdruck in Schritt a) beträgt beispielsweise 500 hPa bis 5 MPa, vorzugsweise 900 hPa bis 1 MPa und besonders bevorzugt 0,1 MPa bis 0,5 MPa.

Die Reaktionstemperatur in Schritt a) beträgt beispielsweise -60°C bis 150°C, bevorzugt zwischen 20°C bis 150°C und ganz besonders bevorzugt zwischen -10°C und 20°C oder zwischen 50°C und 120°C. Bei Temperaturen von über 120°C ist es bevorzugt unter einem Druck von mindestens 1500 hPa zu arbeiten.

Die Reaktionszeit in Schritt a) beträgt beispielsweise 10 s bis 24 h, bevorzugt 5 m bis 10 h.

Bei Einsatz eines Gases enthaltend Phosphorpentafluorid und Chlorwasserstoff wird das den Festbettreaktor oder das Wirbelbett verlassende Gas in einer wässrigen Lösung von Alkalihydroxid, bevorzugt einer wässrigen Lösung von Kaliumhydroxid, besonders bevorzugt in einer 5 bis 30 gew.-%igen, ganz besonders bevorzugt in einer 10 bis 20 gew.-%igen, insbesondere bevorzugt in einer 15 gew.-%igen Kaliumhydroxid in Wasser aufgefangen. Überaschenderweise reagiert Chlorwasserstoff unter den erfindungstypischen Bedingungen nicht messbar mit Lithiumfluorid, so daß Chlorwasserstoff aus dem Festbett- oder Wirbelbettreaktor wieder austritt und dann vorzugsweise neutralisiert wird.

Vorzugsweise erfolgt die Herstellung des in Schritt a) eingesetzten Gases oder Gasgemisches in der Gasphase. Die dafür einzusetzenden Reaktoren, bevorzugt Rohrreaktoren, insbesondere Edelstahlrohre, sowie die für die Synthese des Lithiumdifluorphosphats einzusetzenden Festbett- oder Wirbelbettreaktoren sind dem Fachmann bekannt und beispielsweise beschrieben im Lehrbuch der Technischen Chemie - Band 1, Chemische Reaktionstechnik, M. Baerns, H. Hofmann, A. Renken, Georg Thieme Verlag Stuttgart (1987), S. 249 - 256.

Sollen Lösungen enthaltend Lithiumdifluorphosphat hergestellt werden erfolgt vorzugsweise im Schritt b) das Inkontaktbringen des gemäß a) gebildeten Reaktionsgemisches enthaltend Lithiumdifluorphosphat mit einem organischen Lösungsmittel.

Das Reaktionsgemisch enthält typischerweise das Wertprodukt Lithiumdifluorophosphat und nicht umgesetztes Lithiumfluorid.

Vorzugsweise wird die Reaktion so geführt, dass 1 bis 98 Gew.-%, vorzugsweise 2 bis 80 Gew.-% und besonders bevorzugt 4 bis 80 Gew.-% des eingesetzten, festen Lithiumfluorids in Lithiumdifluorphosphat überführt werden.

Das Inkontaktbringen des gemäß a) gebildeten Reaktionsgemisches mit einem organischen Lösungsmittel erfolgt in einer bevorzugten Ausführungsform nachdem der Festbett oder das Wirbelbett mit Inertgas gespült und somit Spuren von Fluor- oder Chlorwasserstoff oder Phosphorpentafluorid entfernt wurden. Unter Inertgasen sind hier Gase zu verstehen sind, die unter den üblichen Reaktionsbedingungen nicht mit Phosphorpentafluorid, Fluor- oder Chlorwasserstoff oder Lithiumfluorid reagieren. Beispiele sind Stickstoff, Argon und andere Edelgase oder Kohlendioxid, wobei Stickstoff bevorzugt ist.

Als organisches Lösungsmittel werden bevorzugt organische Lösungsmittel eingesetzt, die bei Raumtemperatur flüssig sind und einen Siedepunkt von 300°C oder weniger bei 1013 hPa aufweisen und die weiterhin zumindest ein Sauerstoffatom und/oder ein Stickstoffatom enthalten.

Bevorzugte Lösungsmittel sind weiterhin solche, die keine Protonen aufweisen, die einen pKs-Wert bei 25°C bezogen auf Wasser oder ein wässriges Vergleichssystem von weniger als 20 aufweisen. Solche Lösungsmittel werden in der Literatur auch als "aprotische" Lösungsmittel bezeichnet.

Beispiele für solche Lösungsmittel sind bei Raumtemperatur flüssige Nitrile, Ester, Ketone, Ether, Säureamide oder Sulfone.

Beispiele für Nitrile sind Acetonitril, Propanitril und Benzonitril.

Beispiele für Ether sind Diethylether, Diisopropylether, Methyl-tert.-butylether, Ethylenglycoldimethyl und - diethylether, 1,3-Propandioldimethyl und - diethylether, Dioxan und Tetrahydrofuran.

Beispiele für Ester sind Essigsäuremethyl- und ethylester und Butylacetat oder organische Carbonate wie Dimethylcarbonat (DMC), Diethylcarbonat (DEC) oder Propylencarbonat (PC) oder Ethylencarbonat (EC).

Ein Beispiel für Sulfone ist Sulfolan.

Beispiele für Ketone sind Aceton, Methylethylketon und Acetophenon

Beispiele für Säureamide sind N,N-Dimethylformamid, N,N-Dimethylacetamid, N-Methylformanilid, N-Methylpyrrolidon oder Hexamethylphosphorsäuretriamid.

Besonders bevorzugt werden Acetonitril, Dimethylcarbonat (DMC), Diethylcarbonat (DEC), Propylencarbonat (PC) oder Ethylencarbonat (EC) oder ein Gemisch aus zwei oder mehrerer dieser Lösungsmittel eingesetzt. Insbesondere bevorzugt wird Dimethylcarbonat eingesetzt.

Vorzugsweise erfolgt das Inkontaktbringen des gebildeten Reaktionsgemisches mit einem organischen Lösungsmittel zum Lösen des entstandenen Lithiumdifluorphosphats für einen Zeitraum von 5 Minuten bis 24 Stunden, besonders bevorzugt von 1 Stunde bis 5 Stunden, bei Verwendung eines Fettbett- oder Wirbelbettreaktors derart, dass der Reaktorinhalt des Festbettreaktors oder des Wirbelbettreaktors mit organischem Lösungsmittel solange in Kontakt gebracht wird, bevorzugt unter Rühren oder unter Umpumpen, bis der Gehalt an Lithiumdifluorphosphat im Lösungsmittel konstant bleibt.

Beispielsweise beträgt das Gewichtsverhältnis von eingesetztem organischem Lösungsmittel zu ursprünglich eingesetztem Lithiumfluorid 1:5 bis 100:1.

In einer weiteren Ausführungsform wird soviel organisches Lösungsmittel eingesetzt, dass die nach Schritt b) oder c) resultierende Konzentration von Lithiumdifluorphosphat im organischen Lösungsmittel von 0,1 bis zur Löslichkeitsgrenze im verwendeten Lösungsmittel bei der Lösetemperatur beträgt, beispielsweise 0,1 bis 37 Gew.-% vorzugsweise von 0,3 bis 10 Gew.-% und besonders bevorzugt von 2 bis 10 Gew.-% beträgt. Dem Fachmann sind z.B. aus W02012/004188 die unterschiedlichen Löslichkeiten von Lithiumdifluorphosphat in organischen Lösungsmitteln bekannt.

Das einzusetzende organische Lösungsmittel wird vor seiner Nutzung bevorzugt einem Trocknungsprozess unterzogen, besonders bevorzugt einem Trocknungsprozess über einem Molekularsieb.

Der Wassergehalt des organischen Lösungsmittels sollte möglichst gering sein. In einer Ausführungsform beträgt er 0 bis 500 ppm, vorzugsweise 0 bis 200 ppm und besonders bevorzugt 0 bis 100 ppm..

Erfindungsgemäß zur Trocknung bevorzugt einzusetzende Molekularsiebe sind Zeolithe.

Zeolithe sind kristalline Aluminiumsilikate, die in zahlreichen Modifikationen in der Natur vorkommen, aber auch synthetisch hergestellt werden können. Mehr als 150 verschiedene Zeolithe sind synthetisiert worden, 48 natürlich vorkommende Zeolithe sind bekannt. Die natürlichen Zeolithe werden mineralogisch unter dem Begriff Zeolithgruppe zusammengefasst.

Die Zusammensetzung der Stoffgruppe Zeolithe ist:

Mⁿ⁺_{x/n} [AlO₂)ₓ⁻ (SiO₂)_{y}] · z H₂O

● Der Faktor n ist die Ladung des Kations M und beträgt bevorzugt 1 oder 2.
● M ist bevorzugt ein Kation eines Alkali- oder Erdalkalimetalls. Diese Kationen werden zum elektrischen Ladungsausgleich der negativ geladenen Aluminium-Tertraeder benötigt und nicht in das Haupt-Gitte des Kristalls eingebaut, sondern halten sich in Hohlräumen des Gitters auf- und sind daher auch leicht innerhalb des Gitters beweglich und auch im Nachhinein austauschbar.
● Der Faktur z gibt an, wie viele Wassermoleküle vom Kristall aufgenommen wurden. Zeolithe können Wasser und andere niedermolekulare Stoffe aufnehmen und beim Erhitzen wieder abgeben, ohne dass ihre Kristallstruktur dabei zerstört wird.
● Das molare Verhältnis von SiO₂ zu AlO₂ bzw. x/y in der Summenformel wird als Modul bezeichnet. Es kann aufgrund der Löwenstein-Regel nicht kleiner als 1 werden.

Erfindungsgemäß bevorzugt als Molekülsieb einzusetzende synthetische Zeolithe sind:

| **Zeolith** | **Zusammensetzung der Elementarzelle** |
|---|---|
| Zeolith A | Na₁₂[(AlO₂)₁₂(SiO₂)₁₂] · 27 H₂O |
| Zeolith X | Na₈₆[(AlO₂)₈₆(SiO₂)₁₀₆] · 264 H₂O |
| Zeolith Y | Na₅₆[(AlO₂)₈₆(SiO₂)₁₃₆] · 250 H₂O |
| Zeolith L | K₉[(AlO₂)₉(SiO₂)₂₇] · 22 H₂O |
| Mordenit | Na_{8,7}[(AlO₂)₈₆(SiO₂)_{39,3}] · 24 H₂O |
| ZSM 5 | Na_{0,3}H_{3,8}[(AlO₂)_{4,1}(SiO₂)_{91,9}] |
| ZSM 11 | Na_{0,1}H_{1,7}[(AlO₂)_{1,8}(SiO₂)_{94,2}] |

Das Lithiumdifluorophosphat enthaltende organische Lösungsmittel enthält in der Regel noch Anteile an nicht umgesetztem, nicht oder nicht merklich löslichem Lithiumfluorid, das gemäß Schritt c) vom organischen Lösungsmittel abgetrennt wird.

Bevorzugt erfolgt die Abtrennung in Schritt c) mittels Filtration, Sedimentation, Zentrifugation oder Flotation, besonders bevorzugt mittels Filtration, insbesondere bevorzugt mittels Filtration über einen Filter mit einer mittleren Porenweite von 200 nm oder weniger. Weitere Möglichkeiten für die Feststoffabtrennung sind dem Fachmann bekannt.

Das abgetrennte Lithiumfluorid wird vorzugsweise für den Einsatz in Schritt a) zurückgeführt. Auf diese Weise können insgesamt 60 Gew.-% oder mehr, vorzugsweise 70 Gew.-% oder mehr des eingesetzten Lithiumfluorids letztlich in Lithiumdifluorphosphat überführt werden.

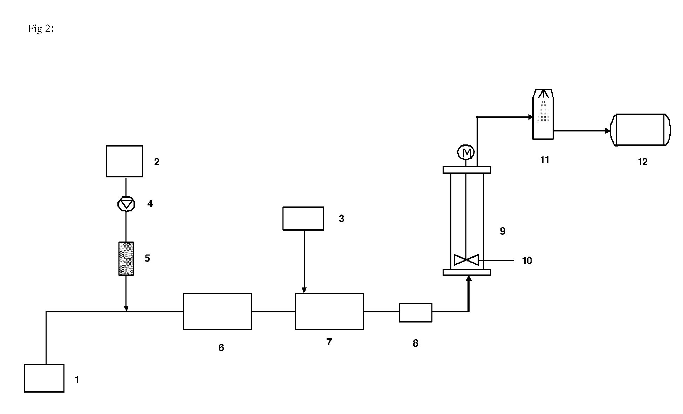

Die im Rahmen der vorliegenden Arbeiten verwendete Apparatur ist in Fig. 2 beschrieben. In Fig. 2 bedeuten
- 1: Vorlage temperiertes, wasserfreier Fluorwasserstoff mit Massflow-Controller
- 2: Vorlage Phosphortrichlorid
- 3: Vorlage elementares Chlor
- 4: Pumpe
- 5: Phosphortrichlorid -Verdampfer
- 6: Edelstahlrohr
- 7: Edelstahlrohr
- 8: Wärmetauscher
- 9: Wirbelbettreaktor
- 10: Rührer
- 11: Wäscher
- 12: Entsorgungsbehälter

Vorzugsweise wird eine Kombination zunächst wenigstens zweier hintereinandergeschalteter Rohrreaktoren, bevorzugt Edelstahlrohr 6 und Edelstahlrohr 7, zur Herstellung von Phosphorpentafluorid in Kombination über wenigstens einen Wärmetauscher mit wenigstens einem Festbettreaktor oder Wirbelbettreaktor eingesetzt, worin dann die Reaktion des Phosphorpentafluorid und schließlich an wasserhaltigem, festem Lithiumfluorid zu Lithiumdifluorophosphat erfolgt.

Der Reaktionsfluss der Reaktanden sei anhand der Fig.2, hier mit zwei Rohrreaktoren, einem Wärmetauscher und einem Wirbelbettreaktor, beispielhaft wie folgt beschrieben. Durch ein beheiztes Edelstahlrohr 6, bevorzugt bei Temperaturen von 20°C bis 600°C, besonders bevorzugt bei 300°C bis 500°C, wird vortemperierter Fluorwasserstoff, bevorzugt vortemperiert auf 30°C bis 100°C, gasförmig aus einer Vorlage 1 dosiert und mit gasförmigem Phosphortrichlorid umgesetzt. Das gasförmige Phosphortrichlorid wird zuvor flüssig aus Vorlage 2 mittels Pumpe 4 in den Verdampfer 5, bevorzugt temperiert zwischen 100°C und 400°C, besonders bevorzugt zwischen 200°C und 300°C, überführt und aus diesem mit dem Fluorwasserstoff im Edelstahlrohr 6 vermischt und dieses aufgeheizt, bevorzugt auf die oben genannten Temperaturen. Das erhaltene Reaktionsgemisch wird in Edelstahlrohr 7 überführt und dort mit elementarem Chlor aus Vorlage 3 vermischt, bevorzugt auf 20°C bis 400°C erhitzt, besonders bevorzugt auf 200°C bis 300°C, und zur Reaktion gebracht. Das hieraus resultierende Gasgemisch enthaltend Phosphorpentafluorid wird mittels Wärmetauscher abgekühlt, bevorzugt auf -60°C bis 80°C, besonders bevorzugt auf - 10°C bis 20°C, und mit festem Lithiumfluorid im Wirbelbettreaktor 9, bevorzugt bei Temperaturen von -60°C bis 150°C, bevorzugt zwischen 20°C bis 150°C und ganz besonders bevorzugt zwischen -10°C und 20°C oder zwischen 50 und 120°C, in Kontakt gebracht, bevorzugt durch Rühren mittels Rührer 10, oder durch Verwirbelung oder einer Kombination aus beiden. Das aus dem Wirbelbettreaktor 9 austretende Gasgemisch wird im Wäscher 11 von sauren Gasen befreit und die erhaltene halogenidhaltige Lösung in den Entsorgungsbehälter 12 überführt. Das feste Reaktionsgemisch verbleibt im Festbettreaktor/Wirbelbettreaktor 9 und wird dort durch Inkontaktbringen mit dem organischen Lösungsmittel teilweise gelöst und die erhaltene Suspension vom Feststoff abgetrennt.

Bei der Reaktion können je nach Wassergehalt des eingesetzten Lithiumfluorids steuerbar weiterhin auch unterschiedliche Mengen an Lithiumhexafluorophosphat entstehen. Insofern ist das erfindungsgemäß Verfahren auch dazu geeignet, gezielt Lösungen von Lithiumdifluorphosphat und Lithiumhexafluorophosphat in organischen Lösungsmitteln zu erzeugen. Sofern eine Abtrennung von Lithiumhexafluorophosphat vom Lithiumdifluorphosphat gewünscht ist, kann man sich die typischerweise stark unterschiedliche Löslichkeit in organischen Lösungsmitteln zu Nutze machen und in einem nachfolgenden Schritt c2) beispielsweise ein Lösungsmittel zusetzen, in dem Lithiumdifluorphosphat schlechter löslich ist, als in dem Lösungsmittel das in Schritt b) eingesetzt wurde, um dadurch Lithiumdifluorphosphat zu fällen. Beispielsweise können in Schritt b) Acetonitril, Ketone wie beispielsweise Aceton und Ether wie beispielsweise Dimethoxyethan eingesetzt werden und die Fällung beispielsweise mit Diethylcarbonat, Dimethylcarbonat oder Ethylencarbonat oder Propylencarbonat erfolgen. Lithiumhexafluorophosphat bleibt dabei in Lösung. Die für die Fällung erforderlichen Mengen kann der Fachmann in einem einfachen Vorversuch ermitteln. Auf diese Weise kann Lithiumdifluorphosphat mit einem so geringen Anteil an Fremdmetallionen erzeugt werden, wie es gemäß den Verfahren im Stand der Technik nicht erhältlich ist.

Daher umfasst die Erfindung auch Lithiumdifluorphosphat mit einem Reinheitsgrad von 99,9000 bis 99,9995 Gew.-% vorzugsweise 99,9500 bis 99,9995 Gew.-% und besonders bevorzugt 99,9700 bis 99,9995 bezogen auf wasserfreies Produkt.

Das Lithiumdifluorphosphat besitzt weiterhin vorzugsweise an Fremdionen
1) einen Gehalt von 0,1 bis 75 ppm, vorzugsweise 0,1 bis 50 und besonders bevorzugt 0,5 bis 10 ppm und besonders bevorzugt 0,5 bis 5 ppm Natrium in ionischer Form und
2) einen Gehalt von 0,01 bis 10 ppm, vorzugsweise 0,5 bis 5 ppm und besonders bevorzugt 0,1 bis 1 ppm Kalium in ionischer Form.

Das Lithiumfluorid besitzt weiterhin vorzugsweise an Fremdionen
3) einen Gehalt von 0,05 bis 300 ppm, vorzugsweise 0,1 bis 250 ppm und besonders bevorzugt 0,5 bis 100 ppm Calcium in ionischer Form und/oder
4) einen Gehalt von 0,05 bis 300 ppm, vorzugsweise 0,1 bis 250 ppm und besonders bevorzugt 0,5 bis 50 ppm Magnesium in ionischer Form.

In einer Ausführungsform enthält das Lithiumdifluorphosphat einen Gehalt an Fremdmetallionen von insgesamt 300 ppm oder weniger, vorzugsweise 20 ppm oder weniger und besonders bevorzugt 10 ppm oder weniger.

Sofern die Lösung enthaltend Lithiumdifluorphosphat nicht direkt als Elektrolyt oder zur Herstellung eines Elektrolytes verwendet wird, kann als Schritt
d) die zumindest teilweise Entfernung von organischem Lösungsmittel erfolgen.

Erfolgt die Entfernung teilweise, ist die Einstellung eines spezifischen Gehaltes an Lithiumdifluorphosphat möglich. Erfolgt sie weitestgehend vollständig, kann ebenfalls hochreines Lithiumdifluorphosphat als Feststoff erhalten werden. Weitestgehend vollständig heißt hier, dass der verbleibende Gehalt an organischem Lösungsmittel 5000 ppm oder weniger, vorzugsweise 2000 ppm oder weniger beträgt.

Die Erfindung betrifft daher weiterhin die Verwendung der erfindungsgemäß erhaltenen Lösungen als oder zur Herstellung von Elektrolyten für Lithiumakkumulatoren oder zur Herstellung von festem Lithiumdifluorophosphat.

Die Erfindung betrifft weiterhin ein Verfahren zur Herstellung von Elektrolyten enthaltend Lithiumdifluorphosphat für Lithiumakkumulatoren dadurch gekennzeichnet dass es zumindest die Schritte a) bis c) und gegebenenfalls d) umfasst.

Der Vorteil der Erfindung liegt insbesondere in der effizienten Verfahrensweise und der hohen Reinheit des erhaltenen Lithiumdifluorphosphats.

### Beispiele

Im Folgenden sind unter der Angabe "%" immer Gew.-% zu verstehen.

In Bezug auf die im Rahmen der vorliegenden Arbeiten verwendete Ionenchromatographie sei auf die Publikation der TU Bergakademie Freiberg, Fakultät der Chemie und Physik, Institut für Analytische Chemie aus März 2002 sowie die darin zitierte Literatur verwiesen.

Im Rahmen der vorliegenden Arbeit wurde die Konzentration des LiPO₂F₂ mit einem Ionenchromatograph mit folgenden Parametern gemessen:

Gerätetyp: Dionex ICS 2100
- Säule:: IonPac® AS20 2*250-mm "Analytical Column with guard"
- Probenvolumen:: 1 µl
- Eluent:: KOH Gradient: 0 min/15 mM, 10 min/15 mM, 13 min/80 mM, 27 min/100 mM, 27.1 min/15 mM, 34 min/15 mM
- Eluent Fließrate:: 0,25 ml/min
- Temperatur:: 30°C
- Self-Regenerating Suppressor:: ASRS® 300 (2-mm)

Die Zuordnung der erhaltenen Signale zu den LiPO2F2 wurde mittels 31P und 19F NMR-Spektroskopie bestätigt. Einzelheiten zur Trennung der LiPO2F2 von andern Phosphor-Fluor haltigen Verbindungen durch Ionenchromatographie finden sich auch in Lydia Terborg Sascha Nowak , Stefano Passerini , Martin Winter , Uwe Karst , Paul R. Haddad , Pavel N. Nesterenko, Analytica Chimica Acta 714 (2012) 121 - 126.

### Beispiel 1: Herstellung von hochreinem Lithiumfluorid

In einer Vorrichtung gemäß Figur 1 wurden in der Vorlage 3 500g festes Lithiumcarbonat technischer Qualität (Reinheit: >98 Gew.-%; Na: 231 ppm, K: 98 ppm, Mg: 66 ppm, Ca: 239 ppm) und 20 Liter Wasser vorgelegt und bei 20°C eine Suspension hergestellt. Nach etwa fünf Minuten wurde die Suspension über die Filtrationseinheit 6, die als Querstromfilter ausgeführt war, geführt und das dabei entstandene Medium enthaltend gelöstes Lithiumcarbonat, hier eine wässrige Lösung von Lithiumcarbonat mit einem Gehalt von 1,32 Gew.-%, über die Leitung 8 in den Reaktor 9 überführt.

Nachdem insgesamt 4 kg des Medium in den Reaktor 9 gepumpt wurden, wurde der Zulauf aus der Filtrationseinheit 6 gestoppt und in den Reaktor 9 gasförmiger Fluorwasserstoff in den Gasraum 11 bei kontinuierlichem Umpumpen des Mediums über die Pumpe 13, die Leitung 14 und die Füllkörperkolonne 15 begonnen. Diese Dosierung wurde beendet, als der pH-Wert der umgepumpten Lösung bei 7,0 lag.

Die entstandene Suspension aus dem Reaktor 9 wurde über die Pumpe 17 und die Leitung 18 zur Filtrationseinheit 19, die hier als Drucknutsche ausgelegt war, gefördert, dort filtriert und das Filtrat, hier ein lithiumcarbonatfreies wässriges Medium über die Leitung 20 zur Vorlage 3 zurückgefördert. Das lithiumcarbonatfreie wässrige Medium wies einen Gehalt an Lithiumfluorid von etwa 0,05 Gew.-% auf.

Der oben beschriebene Vorgang wurde fünfmal wiederholt.

Das an der Filtrationseinheit 19 abgetrennte, noch wasserfeuchte Lithiumfluorid (insgesamt 148g) wurde entnommen und auf einer weiteren Drucknutsche dreimal mit Wasser mit einer Leitfähigkeit von 5 MΩ·cm bei 25°C (jeweils 30 ml) gewaschen.

Das so erhaltene Lithiumfluorid wurde in einem Vakuumtrockenschrank bei 90°C und 100mbar getrocknet.

Ausbeute: 120g eines weißen, feinen Pulvers.

Das erhaltene Produkt wies einen Kaliumgehalt von 0,5 ppm und einen Natriumgehalt von 2,5 ppm auf, der Magnesium-Gehalt des Produktes lag bei 99 ppm, der Calciumgehalt bei 256 ppm. Der Chlorid-Gehalt betrug weniger als 10 ppm.

Der Restfeuchtegehalt betrug 500 ppm Wasser

Die Messung der Partikelgrößenverteilung ergab einen D50-Wert von 45 µm und einen D10-Wert von 22 µm. Die Schüttdichte betrug 1,00 g/cm³.

Bei der Durchführung von 50 Zyklen (Wiederholungen) wurden insgesamt 97 % des eingesetzten Lithiumcarbonats in Form von hochreinem Lithiumfluorid erhalten.

### Beispiel 2a: Herstellung von hochreinem Lithiumdifluorphosphat in Acetonitril (erfindungsgemäß)

Durch ein auf 450°C beheiztes, ca. 6 m langes Edelstahlrohr (ID 8mm) wurde eine Mischung aus 0,6 g/min PCl₃ und der etwas mehr als fünffachen äquimolaren Menge HF (beides gasförmig) geleitet. In diese Reaktionsmischung wurden 8 l/h Chlor eingeleitet und durch ein weiteres, ca. 4 m langes Edelstahlrohr (ID 8mm) geleitet, das auf 250°C erhitzt wurde.

Das Reaktionsprodukt wurde auf -20 abgekühlt und dann durch einen Festbettreaktor mit einem Durchmesser von ca. 45 mm geleitet, das mit Lithiumfluorid gemäß Beispiel 1 (69,5 g) teilweise gefüllt war. Zu diesem Pulver wurde mit Hilfe einer Spritze 500µl Wasser zugegeben. Das Pulver wurde mit einem Rührer, auch unter Reaktionsbedingungen, gerührt. Der Gesamtwassergehalt bestimmte sich zu 7140 ppm.

Das Gasgemisch, das diesen mit Lithiumfluorid gefüllten Reaktor verließ, wurde in einer wässrigen, 15 gew.-%igen KOH aufgefangen.

Nach insgesamt rund 7 Stunden Reaktionszeit wurde die Dosierung der Edukte durch die Dosierung eines Inertgases ersetzt und das Reaktionsgas aus dem System verdrängt. Anschließend wurde das Reaktionsprodukt in drei Portionen mit insgesamt 1000 ml über Molsieb 3A getrocknetes Acetonitril gewaschen und die Waschlösungen analysiert.

Insgesamt wurden 15,8g Lithiumdifluorphosphat in Form einer Lösung in Acetonitril erhalten. Durch Verlängerung der Reaktionsdauer, Verlängerung der Kontaktzeit und Erhöhung der Reaktionstemperatur sowie der Erhöhung des Wassergehaltes lässt sich die Ausbeute und das Verhältnis von Lithiumdifluorphosphat zu Lithiumhexafluorphosphat weiter steigern.

Die Lösung enthielt weiterhin 21,52 g Lithiumhexafluorophosphat.

### Beispiel 3: Versuch der Herstellung von Lithiumdifluorphosphat in Acetonitril (nicht erfindungsgemäß)

Es wurde völlig analog zu Beispiel 2 verfahren mit dem Unterschied, dass dem Lithiumfluorid kein Wasser zugesetzt wurde, d.h. das Lithiumfluorid einen Wassergehalt von 500 ppm aufwies. Des Weiteren wurde die Reaktionsdauer auf 13,5 Stunden verlängert.

Insgesamt wurden neben 80,5 g Lithiumhexafluorophosphat nur 0,095 g Lithiumdifluorphosphat in Form einer Lösung in Acetonitril erhalten, trotz der längeren Reaktionsdauer und der höheren Reaktionsgastemperatur.

## Patentansprüche

1. Verfahren zur Herstellung von Lithiumdifluorphosphat umfassend zumindest den Schritt:
a) Inkontaktbringen von festem Lithiumfluorid mit einem Gas enthaltend Phosphorpentafluorid wobei das feste Lithiumfluorid einen Wassergehalt von mehr als 1.500 ppm, vorzugsweise 1.550 ppm oder mehr, besonders bevorzugt 1550 ppm bis 100.000 ppm, noch weiter bevorzugt 2.000 ppm bis 20.000 ppm und ganz besonders bevorzugt 5.000 ppm bis 15.000 ppm aufweist.

2. Verfahren nach Anspruch 1, **dadurch gekennzeichnet, dass** Lösungen von Lithiumdifluorphosphat in organischem Lösungsmittel hergestellt werden und sich zumindest folgende Schritte anschließen:
b) Inkontaktbringen des gemäß a) gebildeten Reaktionsgemisches enthaltend Lithiumdifluorphosphat mit einem organischen Lösungsmittel, wobei das gebildete Lithiumdifluorphosphat zumindest teilweise in Lösung geht
c) gegebenenfalls aber vorzugsweise Abtrennung von festen Bestandteilen von der Lösung enthaltend Lithiumhexafluorophosphat.

3. Verfahren nach Anspruch 1 oder 2, **dadurch gekennzeichnet, dass** das in Schritt a) eingesetzte Lithiumfluorid einen Reinheitsgrad von 98,0000 bis 99,9999 Gew.-%, vorzugsweise 99,0000 bis 99,9999 Gew.-%, weiter bevorzugt 99,9000 bis 99,9995 Gew.-%, besonders bevorzugt 99,9500 bis 99,9995 Gew.-% und ganz besonders bevorzugt 99,9700 bis 99,9995 Gew.-% bezogen auf wasserfreies Produkt besitzt.

4. Verfahren nach einem der Ansprüche 1 bis 3, **dadurch gekennzeichnet, dass** das in Schritt a) eingesetzte Lithiumfluorid an Fremdionen aufweist:
● einen Gehalt von 0,1 bis 250 ppm, bevorzugt 0,1 bis 75 ppm, weiter bevorzugt 0,1 bis 50 und besonders bevorzugt 0,5 bis 10 ppm und ganz besonders bevorzugt 0,5 bis 5 ppm Natrium in ionischer Form und
● einen Gehalt von 0,01 bis 200 ppm, bevorzugt 0,01 bis 10 ppm, weiter bevorzugt 0,5 bis 5 ppm und besonders bevorzugt 0,1 bis 1 ppm Kalium in ionischer Form.

5. Verfahren nach einem der Ansprüche 1 bis 4, **dadurch gekennzeichnet, dass** das in Schritt a) eingesetzte Lithiumfluorid an Fremdionen aufweist:
● einen Gehalt von 0,05 bis 500 ppm, bevorzugt 0,05 bis 300 ppm, weiter bevorzugt 0,1 bis 250 ppm und besonders bevorzugt 0,5 bis 100 ppm Calcium in ionischer Form und/oder
● einen Gehalt von 0,05 bis 300 ppm, vorzugsweise 0,1 bis 250 ppm und besonders bevorzugt 0,5 bis 50 ppm Magnesium in ionischer Form.

6. Verfahren nach einem der Ansprüche 1 bis 5, **dadurch gekennzeichnet, dass** das Inkontaktbringen von festem Lithiumfluorid enthaltend den gemäß Anspruch 1 spezifizierten Wassergehalt mit einem Gas enthaltend Phosphorpentafluorid in einem Festbett oder einem Wirbelbett erfolgt.

7. Verfahren nach einem der Ansprüche 1 bis 5, **dadurch gekennzeichnet, dass** das eingesetzte Lithiumfluorid nach einem Verfahren gewonnen wird, das zumindest folgende Schritte umfasst:
a) Bereitstellung eines wässrigen Mediums enthaltend gelöstes Lithiumcarbonat
b) Umsetzung des gemäß a) bereitgestellten wässrigen Mediums mit gasförmigem Fluorwasserstoff zu einer wässrigen Suspension von festem Lithiumfluorid
c) Abtrennung des festen Lithiumfluorid aus der wässrigen Suspension
d) Trocknung des abgetrennten Lithiumfluorids

8. Verfahren nach einem der Ansprüche 1 bis 7, **dadurch gekennzeichnet, dass** das Phosphorpentafluorid
durch ein Verfahren hergestellt wird, das zumindest die folgenden Schritte umfasst.
1) Umsetzung von Phosphortrichlorid mit Fluorwasserstoff zu Phosphortrifluorid und Chlorwasserstoff
2) Umsetzung von Phosphortrifluorid mit elementarem Chlor zu Phosphordichlorid trifluorid
3) Umsetzung von Phosphordichloridtrifluorid mit Fluorwasserstoff zu Phosphorpentafluorid und Chlorwasserstoff oder
durch Umsetzung von Tetraphosphordecaoxid mit Fluorwasserstoff.

9. Verfahren nach einem der Ansprüche 1 bis 8, **dadurch gekennzeichnet, dass** der Reaktionsdruck in Schritt a) 500 hPa bis 5 MPa, vorzugsweise 900 hPa bis 1 MPa und besonders bevorzugt 1500 hPa bis 0,5 MPa beträgt.

10. Verfahren nach einem der Ansprüche 2 bis 9, **dadurch gekennzeichnet, dass** als organisches Lösungsmittel solche eingesetzt werden, die bei Raumtemperatur flüssig sind und einen Siedepunkt von 300°C oder weniger bei 1013 hPa aufweisen und die weiterhin zumindest ein Sauerstoffatom und/oder ein Stickstoffatom enthalten.

11. Verfahren nach Anspruch 10, **dadurch gekennzeichnet, dass** als Lösungsmittel bei Raumtemperatur flüssige Nitrile, Ester, Ketone, Ether, Säureamide oder Sulfone eingesetzt werden.

12. Verfahren nach einem der Ansprüche 2 bis 11, **dadurch gekennzeichnet, dass** zum Erhalt von festen Lithiumdifluorphosphat entweder in einem nachfolgenden Schritt
c2) ein organisches Lösungsmittel zugesetzt wird, in dem Lithiumdifluorphosphat schlechter löslich ist, als in dem organischen Lösungsmittel das in Schritt b) eingesetzt wurde, um so Lithiumdifluorphosphat zu fällen oder in einem Schritt
d) das organische Lösungsmittel entfernt wird.

13. Lithiumdifluorphosphat mit einem Reinheitsgrad von 99,9000 bis 99,9995 Gew.-% vorzugsweise 99,9500 bis 99,9995 Gew.-% und besonders bevorzugt 99,9700 bis 99,9995 bezogen auf wasserfreies Produkt.

14. Lithiumdifluorphosphat nach Anspruch 13 enthaltend an Fremdionen:
● einen Gehalt von 0,1 bis 75 ppm, vorzugsweise 0,1 bis 50 und besonders bevorzugt 0,5 bis 10 ppm und besonders bevorzugt 0,5 bis 5 ppm Natrium in ionischer Form und
● einen Gehalt von 0,01 bis 10 ppm, vorzugsweise 0,5 bis 5 ppm und besonders bevorzugt 0,1 bis 1 ppm Kalium in ionischer Form und vorzugsweise weiterhin
● einen Gehalt von 0,05 bis 300 ppm, vorzugsweise 0,1 bis 250 ppm und besonders bevorzugt 0,5 bis 100 ppm Calcium in ionischer Form und/oder
● einen Gehalt von 0,05 bis 300 ppm, vorzugsweise 0,1 bis 250 ppm und besonders bevorzugt 0,5 bis 50 ppm Magnesium in ionischer Form
wobei besonders bevorzugt das Lithiumdifluorphosphat einen Gehalt an Fremdmetallionen von insgesamt 300 ppm oder weniger, vorzugsweise 20 ppm oder weniger und besonders bevorzugt 10 ppm oder weniger aufweist.

15. Verfahren zur Herstellung von Elektrolyten enthaltend Lithiumdifluorphosphat für Lithiumakkumulatoren **dadurch gekennzeichnet dass** es zumindest die Schritte a) bis c) und gegebenenfalls c2) und/oder d) umfasst.
